Europäisches Patentamt

European Patent Office

Office européen des brevets

(11) Publication number: **0 194 639 B1**

# EUROPEAN PATENT SPECIFICATION

(45) Date of publication of patent specification: **29.07.92**

(51) Int. Cl.5: **G02B 6/12**, B32B 7/02, B32B 27/08

(21) Application number: **86103218.3**

(22) Date of filing: **11.03.86**

(54) **Thin film waveguide path and manufacturing method therefor.**

(30) Priority: **11.03.85 JP 48847/85**

(43) Date of publication of application:
**17.09.86 Bulletin 86/38**

(45) Publication of the grant of the patent:
**29.07.92 Bulletin 92/31**

(84) Designated Contracting States:
**DE GB**

(56) References cited:
**GB-A- 602 314**

(73) Proprietor: **Kuraray Co., Ltd.**
**2045-1 Aoeyama Sakazu**
**Kurashiki-city Okayama Prefecture, 710(JP)**

(72) Inventor: **Kawatsuki, Nobuhiro**
**5 block-10 1621, Sakazu**
**Kurashiki-City Okayama-ken(JP)**
Inventor: **Uetsuki, Masao**
**2545-4, Sakazu**
**Kurashiki-City Okayama-ken(JP)**
Inventor: **Nakagawa, Junji**
**16-4, 1-chome Hirata**
**Ichikawa-City Chiba-ken(JP)**

(74) Representative: **Behrens, Dieter, Dr.-Ing. et al**
**Wuesthoff & Wuesthoff Patent- und Recht-**
**sanwälte Schweigerstrasse 2**
**W-8000 München 90(DE)**

EP 0 194 639 B1

## Description

Field of the invention

This invention relates to a thin film waveguide path which is formed of organic high molecular material with extremely low beam propagation loss.

Background of the prior art

One of the known art is a low loss waveguide path which is provided with a thin film waveguide path of acryl series resin coated on a quartz glass substrate which is optically polished, by a spin coat method (e.g. Optical and Quantum Electronics, Vol. 7, 1975, pages 443 - 446). On the other hand, another known art is a waveguide path comprising a polymethyl methacrylate (PMMA) substrate and nitrocellulose thin film waveguide path layer (e.g. Applied Physics Letters, Vol. 29, No. 5; Sept. 1, 1976, pages 303 - 304).

The former waveguide path is not only convenient as it is formed with the spin coat method, but also has an advantage of very reduced value of 0.13 dB/cm of the beam propagation loss. However, its material cost is very expensive.

On the other hand, the latter waveguide path is inexpensive in its material and has a drawback of high beam propagation loss.

The Japanese Laid-Open Patent Publication No. 59/1984 - 151107 discloses that the substrate is formed of a high molecular compound, and a beam waveguide path is formed of an organic compound or a high molecular compound on the substrate. However, such beam waveguide path has a disadvantage of high beam propagation loss.

According to studies by the inventors, they have confirmed that the beam propagation loss can not be lowered whatever careful they may be in preparing the path to which organic high molecular material which is normally used as a medium for beam waveguide path, is provided by applying a spin coat method on a plastic substrate.

High molecular materials for beam waveguide path such as polycarbonate (PC), polystyrene (PSt), PMMA and polysulfone (PSF) which are transparent plastics are generally close together in solubility parameters and they well dissolve in hydrocarbon halides such as dichloromethane and chloroform and also in hydrocarbons such as tetrahydrofuran (THF) and benzene. When such a high molecular material is dissolved in those solvents and coated on an optically polished glass substrate, the coated thin film is good in uniformity and a thin film beam waveguide path with its propagation loss lower than 1 dB/cm is easily produced. However, when the transparent plastic is coated on a plastic substrate (PC, PMMA ) by employing hydrocarbon halide as a solvent, how much we pay the attention, an excellent light waveguide path of low light propagation loss less than 20 dB/cm is not produced, and hence it is unfit for use as light waveguide path.

It is an object of the invention as defined in the appendent claims to provide a thin film waveguide structure comprising inexpensive organic high molecular material, being of an extremely low propagation loss type and which is durable, and to provide a method for manufacturing such film waveguide structure.

In a waveguide structure comprising a selfsupporting substrate which is formed of high molecular material and comprising a waveguide path layer which is formed of organic high molecular material, the above-mentioned drawbacks are overcome by providing at least one intermediate layer which is formed of a medium of smaller refractive index than those of the media forming the waveguide layers, between the substrate and the wave-guide layers, which has a different solubility in a solvent from that of an adjacent layer.

The film waveguide structure according to the invention is composed of low cost plastic material but has excellent and has an extremely low propagation loss. As compared with a waveguide structure with a conventional glass substrate, it is possible to reduce the weight to less than half. Further, while the structure with the conventional glass substrate needs to polish such substrate and it is difficult to form it into an arbitrary shape, this invention affords an easy shaping as its substrate and light waveguide path layer both are made of synthetic resin and thus a remarkably low cost light waveguide structure can be produced.

As a substrate to be used in this invention, any type of organic high molecular material having enough thickness and strength for support is available. However, preferred low cost materials are listed in claims 4 to 6.

Kinds of materials to be used are properly selected in considering of an end of use and material of the respective layer and other layers.

In this invention, an introduction of the intermediate layer or layers and a selection of the material (b) composing the intermediate layer or layers are the most important. As to the organic high molecular material (b), the following characteristics are essential.

(1) It differs from the high molecular material (a) forming the waveguide path layer in solvent solubility.

(2) It has a refractive index lower than that of the high molecular material (a).

(3) It is formed by the organic high molecular material different from the substrate or substrates.

Through the works of the inventors, it is noted that a lamination of materials having different solvent solubility remarkably improves the reduction of the beam propagation loss. In this invention, the different solvent solubility means that after forming the intermediate layer and when the beam waveguide path layer is formed, the surface o the intermediate layer can be coated with solvent of the high molecular material for the beam waveguide path, without a substantial change such as dissolving or swelling the surface of the intermediate layer.

This phenomenon is quantitatively expressed by a difference between solubility parameters according to the definition of Polymer Handbook (J. Brandrup and E.H. Immergut; John Wiley & Sons, New York; 1975; 2nd edition), and the value should be

not less than $2.0 \times 10^{-3}$ $(J/m^3)^{1/2}$,

preferably not less than $2.5 \times 10^{-3}$ $(J/m^3)^{1/2}$,

most preferably no less than $3. \times 10^{-3}$ $(J/m^3)^{1/2}$.

According to this invention, a provision of the intermediate layer or layers allows unevenness of the surface of a substrate (supporting member) to be smoothed, which comprises the organic high molecular material commercially available, and reduces the unevenness on the interface of beam waveguide path layer when laminating the beam waveguide layer. Hence, as a beam waveguide structure comprising organic high molecular material, a remarkable decrease of the beam propagation loss is found.

As the intermediate layer or layers, any materials can be available as long as the above object is achieved. Hence, such layer may be mono-layer or plural layers. A laminated construction of plural layers is used when higher performance than the mono-layer is requested. For example, such is preferable when adhesion-performance is raised between said layers.

As the material (b) forming the intermediate layer or layers, any one having the above characteristics is available, but relatively transparent resin is selected. For example, cellulose acetate, nitrocellulose, polyvinyl alcohol, polyurethane, poly(fluoroalkyl methacrylate) and epoxy resin. Actually used material (b) is arbitrarily selected by considering the above objects, along an end of use and materials of a substrate or waveguide path layer.

Now, preferred embodiments of this invention will be hereinafter discussed in detail with reference to the accompanying drawings.

In the Figures, numerals 1 and 1a are a high molecular wave-guide path layer, 2, 2a, 2b and 2c are interposed layers, 3 is a substrate and 4 is an upper clad layer.

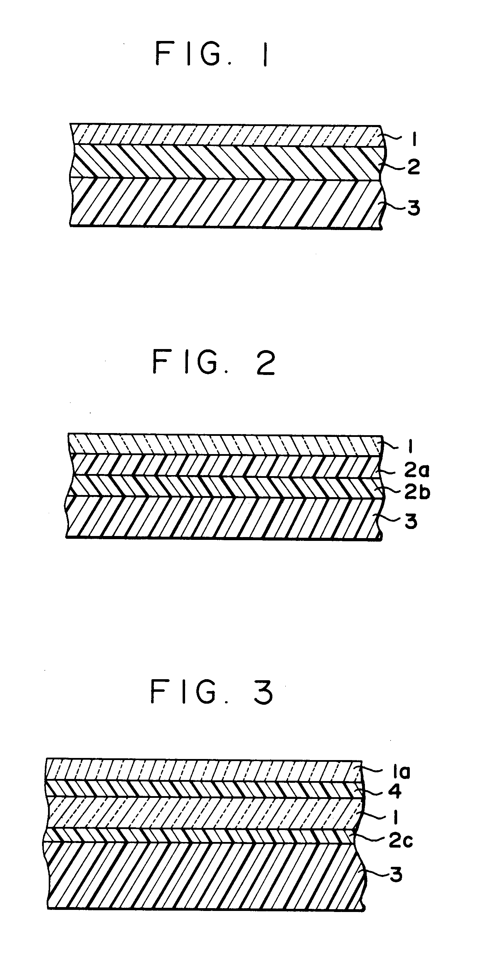

In these examples, polymethyl methacrylate or polycarbonate plastic plate of low cost is employed for a substrate 3. The substrate 3 is preferably baked at a temperature near the glass transition temperature (Tg) but may not be necessary. In FIG. 1, for the intermediate layer 2, cellulose acetate, nitrocellulose, polyvinyl alcohol, et al are selected. Those polymers are well dissolved in solvent, for example, water, alcohol, dimethyl formamide or carbonyl compounds such as aceton, which hardly dissolves transparent high molecular material which is used frequently for a beam waveguide path layer.

When it is a problem to get adherence to the substrate 3 as is the case the intermediate layer 2 is formed of polyvinyl alcohol, an intermediate layer 2b comprising polyurethane, for example, is coated on the substrate 3 as shown in FIG. 2 and another intermediate layer 2a is coated on the layer 2b for overcoming the adherence problem. These intermediate layers 2a, 2b are normally 0.5 to 2 $\mu$m in thickness, and may be sometimes 0.01 - 10 $\mu$m.

If high molecular compound having a refractive index larger than the intermediate layers 2, 2a, 2b is coated as the waveguide path layer 1 with a solution dissolved in a solvent which does not dissolve the high molecular compound at the same condition when such is coated on an optically polished glass substrate, a beam waveguide path of less than 1 dB/cm wave propagation loss is easily achieved. The thickness of the beam waveguide path layer 1 is normally 0.2 to 5.0 $\mu$m but a wider range than the above, for example, of 0.1 - 10 $\mu$m is also available.

In this invention, a provision method of the intermediate layer 2 and beam waveguide path layer 1 is not limited.

To obtain homogeneous thickness, flow elongation and bar coat methods are exemplified but the spin coat method is better as it is simple and controls homogeneously the thickness.

The beam waveguide path of the invention is preferably employed when it is used as a single mode thin film waveguide path. Furthermore, the light waveguide path can be processed by a known method in the same manner as a conventional waveguide path and usable for various beam optical devices.

As required, the light waveguide path of this invention is provided with an arbitrary upper layer. When such upper layer is given, high molecular compound dissolved in solvent which does not substantially dissolve the light waveguide path layer is coated and dried. When such upper layer is utilized as a clad layer, its refractive index should be lower than that of a high molecular compound employed for the light waveguide path.

Now, the invention will be further described with reference to the examples.

EXAMPLE 1

For the substrate 3 of 2 mm in thickness, a polymethyl methacrylate plate is used and cleaned by isopropanol, and then baked at 110°C for one hour and naturally cooled. For the intermediate layer 2, a solution of nitrocellulose of the solubility parameter $22.0 \times 10^{-3}$ $(J/m^3)^{1/2}$ which is dissolved in a mixed solvent of isopropanol-dimethylformamide is spin coated and then dried. At this state, a thickness of the intermediate layer is 0.131 $\mu$m. Then, a solution of polycarbonate of the solubility parameter $19.5 \times 10^{-3}$ $(J/m^3)^{1/2}$ which is dissolved in chloroform is spin coated and then dried, the beam waveguide path layer 1 of 0.813 $\mu$m in thickness being thus achieved.

The resulted waveguide path shows good adherence to each layer.

When those are measured by TE waves using 6328 nm He-Ne laser beam, a waveguide mode is the single mode and the beam propagation loss is less than 0.3 dB/cm.

EXAMPLES 2 - 8 and comparing examples 1 - 4

Beam waveguide paths of various multiple layer construction have been produced along the Example 1 except various change of the substrate 3, intermediate layer 2 and waveguide path layer 1.

Those results are shown together with Example 1 in Table 1.

EXAMPLE 9

The waveguide path achieved in EXAMPLE 7 is spin-coated with a solution in which cellulose acetate is dissolved in dimethylformamide as used in the intermediate layer 2, and then dried, and provided with a 0.08 $\mu$m thickness clad layer.

As to the waveguide mode of the waveguide path 1 is the single mode when measured by TE wave as in EXAMPLE 7 and the propagation loss is as good as 0.2 dB/cm.

Table 1

| | waveguide path layer | | | intermediate layer | | | substrate | | waveguide mode | light propagation |
|---|---|---|---|---|---|---|---|---|---|---|
| | material (a) (solvent) | solubility parameter $(J/m^3)^{1/2} \cdot 10^{-3}$ | layer thickness μm | material (b) (solvent) | solubility parameter $(J/m^3)^{1/2} \cdot 10^{-3}$ | layer thickness μm | material (c) | affinity | number (TE wave) | loss dB/cm |
| Examples 1 | PC $(CHC\ell_3)$ | 19.5 | 0.813 | NC (DMF) | 22.0 | 0.131 | PMMA | good | 1 | 0.3 |
| 2 | PMMA (benzene) | 19.0 | 2.98 | CA (DMF) | 24.5 | 1.03 | PMMA | good | 1 | 0.2 |
| 3 | Pα-MS $(CHC\ell_3)$ | 18.5 | 0.550 | NC (DMF) | 22.0 | 0.310 | PC | good | 1 | 1.0 |
| 4 | Pα-MS $(CHC\ell_3)$ | 18.5 | 0.550 | PVA (water) | 25.8 | 0.341 | PMMA | good | 1 | 0.5 |
| 5 | PSF $(CHC\ell_3)$ | 18.8 | 0.521 | NC (DMF) | 22.0 | 0.231 | PMMA | good | 1 | 0.5 |
| 6 | PSF $(CHC\ell_3)$ | 18.8 | 1.11 | PVA (water) | 25.8 | 0.325 | PMMA | good | 2 | 0.7 (TEo) |
| 7 | PCHMA (toluene) | 19.2 | 1.30 | CA (DMF) | 24.5 | 0.13 | PMMA | good | 1 | 0.2 |
| 8 | PCHMA (benzene) | 19.2 | 1.30 | FM (DMF) | - | 0.13 | PMMA | good | - | 0.2 (TEo) |
| Comparison Examples 1 | PC $(CHC\ell_3)$ | 19.5 | 0.650 | nil | - | - | optically polished glass | bad | 1 | 0.3 |
| 2 | PC $(CHC\ell_3)$ | 19.5 | 0.641 | nil | - | - | PMMA | good | 1 | more than 20 |
| 3 | Pα-MS $(CHC\ell_3)$ | 18.5 | 0.750 | nil | - | - | PMMA | good | 1 | more than 20 |
| 4 | PMMA (benzene) | 19.0 | 0.962 | nil | - | - | Pyrex glass (not polished) | good | 1 | 1.9 |

EP 0 194 639 B1

Notes:  Abbreviation and refractive index

PC    :  polycarbonate (1.585)

NC    :  nitrocellulose (1.52)

PMMA  :  poly(methyl methacrylate) (1.49)

CA    :  cellulose acetate (1.48)

Pα-MS :  poly(α-methylstyrene) (1.59)

PVA   :  poly(vinyl alcohol) (1.53)

PSF   :  polysulfone (1.63)

PCHMA :  poly(cyclohexylmethacrylate) (1.505)

FM    :  tetrafluorobutylmethacrylate-methylmethacrylate

co-polymer (1.429)

optically polished glass (1.515)

Pyrex glass (1.47)


Abbreviation of employed solvent

CHCl$_3$:  chloroform

DMF   :  dimethylformaldehyde


EXAMPLE 10

The same substrate 3 as in EXAMPLE 1 is employed, cleaned by isopropanol, then baked at 110°C for one hour, and cooled.

Subsequently, for the intermediate layer 2b, a polyurethane solution of the solubility parameter 22.0 x 10$^{-3}$ (J/m$^3$)$^{1/2}$ dissolved in dimethyl formamide is spin-coated and dried. Its layer thickness is 1.2 $\mu$m. Then for the intermediate layer 2a, polyvinyl alcohol of solubility parameter 25.8 x 10$^{-3}$ (J/m$^3$)$^{1/2}$ dissolved in water is also spin-coated and dried. Its thickness is 0.462 $\mu$m.

Polycarbonate (solubility parameter 19.5 x 10$^{-3}$ (J/m$^3$)$^{1/2}$) solution dissolved in chloroform is spin-coated on the substrate 3 with the intermediate layers 2a, 2b and then dried thereby forming beam waveguide path layer 1 of a film thickness of 0.673 $\mu$m.

The resulted beam waveguide path has good affinity for each layer. When the waveguide mode is measured by the same TE wave as in Example 1, it shows the single mode, and the propagation loss is 0.8 dB/cm in good outcome.


EXAMPLE 11

The beam waveguide path is produced along Example 10 except use of poly α-methylstyrene of solubility parameter 18.5 x 10$^{-3}$ (J/m$^3$)$^{1/2}$ instead of polycarbonate.

Thus achieved waveguide path shows a good affinity for each layer. When a waveguide mode is measured by the same TE wave as in Example 1, it is the single mode, and the beam propagation loss is 0.8 dB/cm.

EXAMPLE 12

In the Example 8, the substrate is prepared with a change of PMMA to PC, and it also shows excellent affinity and low beam propagation loss.

EXAMPLE 13

The light waveguide path obtained by EXAMPLE 2 is spin-coated by a solution in which nitrocellulose of the refractive index of 1.52 is dissolved in dimethyl formamide and dried. The thickness in this case is 0.05 $\mu$m. Then, ultraviolet ray cured type photoresist is spin-coated to 0.1 $\mu$m thickness on the path, and exposed by a interference exposure method with He-Cd laser, thereby forming a pattern of line and space of 0.5 $\mu$m. Then nitrocellulose is etched by giving an ion beam, and the light waveguide path having grating formed on the waveguide path layer is thus obtained.

EXAMPLE 14

The same substrate 3 as in EXAMPLE 1 is employed, cleaned by isopropanol, then baked for one hour at 110°C and cooled naturally. Subsequently, it is spin coated by cellulose acetate solution of solubility parameter 24.5 x 10$^{-3}$ (J/m$^3$)$^{1/2}$ dissolved in dimethyl formamide for the intermediate layer 2c and dried. Its thickness is 0.13 $\mu$m. Then, polycyclohexylmethacrylate solution of 19.2 x 10$^{-3}$ (J/m$^3$)$^{1/2}$ of solubility parameter dissolved in toluene is spin-coated for a first light waveguide path layer 1 and then baked for 2 hours at 95 C. Its thickness is 1.4 $\mu$m. Then, cellulose acetate dissolved in dimethylformamide is spin-coated on the first light waveguide path layer 1, and dried providing an upper clad layer 4 in 3 pm thickness. Furthermore, polycyclohexylmethacrylate dissolved in toluene is spin coated for a second light waveguide path layer 1a as is for the first light waveguide path layer 1 and baked, providing 1.4 $\mu$m thick coat, thereby forming the light waveguide path having two layers of the first and second light waveguide path layers 1, 1a. In this case, the light propagation loss is 0.2 dB/cm for both the first and second light waveguide paths.

**Claims**

1. A thin film waveguide structure comprising:
   (A) a substrate (3) comprising a first organic high molecular material (c) for supporting at least one intermediate layer (2) and a waveguide path layer (1);
   (B) at least one intermediate layer (2) comprising a second organic high molecular material (b) whose solvent solubility parameter is different from that of said first material (c);
   (C) a waveguide path layer (1) comprising a transparent third organic high molecular material (a) whose solvent solubility parameter differs from that of said second material (b) by not less than 2.0 x 10$^{-3}$ (J/m$^3$)$^{\frac{1}{2}}$ and whose refractive index is higher than that of said second material (b);
   and wherein said at least one intermediate layer (2) is overlying said substrate (3) and said waveguide path layer (1) is overlying said intermediate layer (2).

2. A waveguide path according to claim 1,
   characterized in that
   the intermediate layer has a laminated structure comprising layers (2a, 2b) for increasing adherence and for smoothing a surface.

3. A waveguide path according to claims 1 or 2,
   characterized in that
   the organic high molecular material (a) of the waveguide path layer (1) is one selected from the group consisting of acrylate series resin, polycarbonate, polystyrene series polymer, polysulfon and polyurethane.

4. A waveguide path according to any of claims 1 to 3,
   characterized in that
   the organic high molecular material (b) of the intermediate layer (2) is one selected from the group consisting of cellulose acetate, nitrocellulose, polyvinyl alcohol, polyurethane, epoxy resin, and poly-(fluoroalkyl methacrylate).

5. A waveguide path according to any of claims 1 to 4,
characterized in that
the organic high molecular material (c) of the substrate (3) is one selected from the group consisting of polymethyl metacrylate, polycarbonate polyester, nylon, polyethylene, polysulfone and polystyrene.

6. A method of manufacturing a thin film waveguide structure according to any of claims 1 to 6 comprising the steps of:
- providing a substrate (3) comprising a first organic high molecular material (c) of sufficient thickness and strength to be self-supporting;
- preparing an intermediate layer (2) atop a surface of said substrate (3) by applying and drying a solution of a second high molecular material (b), said second material having a solvent solubility parameter different from that of the first material (c) of the substrate (3);
- dissolving a transparent third organic high molecular material (a), whose solvent solubility differs from that of said second material (b) by not less than $2.0 \times 10^{-3}$ $(J/m^3)^{\frac{1}{2}}$ and whose refractive index is higher than that of said second material (b), in a solvent which does not substantially dissolve said second material (b);
- preparing a waveguide layer atop the surface of said intermediate layer (2) by applying said solution of the third material (a) to said surface and drying said solution.

7. The method according to claim 6,
characterized in that
the solutions of intermediate layer (2) and/or the waveguide layer (1) are applied by spin coating.

**Revendications**

1. Structure d'un guide d'ondes en couche mince, comprenant:
A) un substrat (3) comportant un premier matériau organique à haut poids moléculaire (c) comme support d'au moins une couche intermédiaire (2) et d'une couche de trajet (1) du guide d'ondes,
B) une couche intermédiaire (2), au moins, comportant un deuxième matériau organique à haut poids moléculaire (b) dont le paramètre de solubilité dans un solvant est différent de celui dudit premier matériau (c),
C) une couche de trajet (1) du guide d'ondes, comportant un troisième matériau organique transparent à haut poids moléculaire (a) dont le paramètre de solubilité dans un solvant s'écarte de celui dudit deuxième matériau (b) d'un montant pas inférieur à $2,0 \times 10^{-3}$ $(J/m^3)^{\frac{1}{2}}$ et dont l'indice de réfraction est plus élevé que celui dudit deuxième matériau (b),
et dans laquelle ladite couche intermédiaire (2), au moins, est sus-jacente au substrat (3) et ladite couche de trajet (1) du guide d'ondes est sus-jacente à ladite couche intermédiaire (2).

2. Trajet d'un guide d'ondes selon la revendication 1,
caractérisé en ce que
la couche intermédiaire a une structure en feuillets comprenant des couches (2a, 2b) en vue d'augmenter l'adhérence et d'égaliser une face.

3. Trajet d'un guide d'ondes selon la revendication 1 ou 2,
caractérisé en ce que
le matériau organique à haut poids moléculaire (a) de la couche de trajet (1) du guide d'ondes est choisi parmi le groupe comprenant une résine du groupe d'acrylates, le polycarbonate, un polymère du groupe de polystyrènes, le polysulfone et le polyuréthane.

4. Trajet d'un guide d'ondes selon l'une des revendications 1 à 3,
caractérisé en ce que
le matériau organique à haut poids moléculaire (b) de la couche intermédiaire (2) est choisi parmi le groupe comprenant l'acétocellulose, la nitrocellulose, l'alcool polyvinylique, le polyuréthane, la résine époxy, et le poly(méthacrylate de fluoroalcoyl).

**5.** Trajet d'un guide d'ondes selon l'une des revendications 1 à 4,
caractérisé en ce que
le matériau organique à haut poids moléculaire (c) du substrat (3) est choisi parmi le groupe comprenant le polyméthacrylate du méthyle, le polycarbonate polyester, le nylon, le polyéthylène, le polysulfone et le polystyrène.

**6.** Procédé de fabrication d'une structure de guide d'ondes en couche mince selon l'une des revendications 1 à 5, comprenant les phases suivantes:
- prévoir un substrat (3) comportant un premier matériau organique à haut poids moléculaire (c) ayant une épaisseur et une rigidité suffisantes pour porter de lui-même,
- préparer une couche intermédiaire (2) sur le dessus d'une surface du substrat (3) en appliquant et séchant une solution d'un deuxième matériau à haut poids moléculaire (b), ledit deuxième matériau ayant un paramètre de solubilité dans un solvant différent de celui du premier matériau (c) du substrat (3),
- dissoudre un troisième matériau organique transparent à haut poids moléculaire (a) dont la solubilité dans un solvant s'écarte de celle dudit deuxième matériau (b) d'un montant pas inférieur à $2{,}0 \times 10^{-3}$ $(J/m^3)^{\frac{1}{2}}$ et dont l'indice de réfraction est plus élevé que celui dudit deuxième matériau (b), dans un solvant qui ne dissout pas ledit deuxième matériau (b) en grande partie,
- préparer une couche de guide d'ondes sur le dessus de la surface de ladite couche intermédiaire (2) en appliquant ladite solution du troisième matériau (a) à ladite surface et en séchant ladite solution.

**7.** Procédé selon la revendication 6,
caractérisé en ce que
les solutions de la couche intermédiaire (2) et/ou de la couche de guide d'ondes (1) sont appliquées par le revêtement 'spin coating'.

**Patentansprüche**

**1.** Dünnfilm-Wellenleiter-Aufbau, mit
A) einem Substrat (3) aus einem ersten organischen hochmolekularen Material (c) als Träger von wenigstens einer Zwischenschicht (2) und einer Wellenleiter-Leiterschicht (1),
B) wenigstens einer Zwischenschicht (2) aus einem zweiten organischen hochmolekularen Material (b), dessen Lösungsmittel-Löslichkeits-Parameter von dem des ersten Materials (c) verschieden ist,
C) einer Wellenleiter-Leiterschicht (1) aus einem durchsichtigen dritten organischen hochmolekularen Material (a), dessen Lösungsmittel-Löslichkeits-Parameter von dem des zweiten Materials (b) um nicht weniger als $2{,}0 \times 10^{-3}$ $(J/m^3)^{\frac{1}{2}}$ abweicht und dessen Brechungsindex größer als der des zweiten Materials (b) ist,
und bei der die wenigstens eine Zwischenschicht (2) auf dem Substrat (3) aufliegt und die Wellenleiter-Leiterschicht (1) auf der Zwischenschicht (2) aufliegt.

**2.** Wellenleiter-Leiter nach Anspruch 1,
dadurch gekennzeichnet, daß
die Zwischenschicht laminaren Aufbau aus Schichten (2a, 2b) zur Erhöhung der Haftung und zum Glätten einer Fläche hat.

**3.** Wellenleiter-Leiter nach Anspruch 1 oder 2,
dadurch gekennzeichnet, daß
das organische hochmolekulare Material (a) der Wellenleiter-Leiterschicht (1) aus der Gruppe mit einem Harz aus der Acrylat-Gruppe, Polycarbonat, einem Polymeren aus der Polystyrol-Gruppe, Polysulfon und Polyurethan gewählt ist.

**4.** Wellenleiter-Leiter nach einem der Ansprüche 1 bis 3,
dadurch gekennzeichnet, daß
das organische hochmolekulare Material (b) der Zwischenschicht (2) aus der Gruppe mit Celluloseacetat, Nitrocellulose, Polyvinylalkohol, Polyurethan, Epoxyharz und Poly(fluoralkylmethacrylat) gewählt ist.

**5.** Wellenleiter-Leiter nach einem der Ansprüche 1 bis 4,

dadurch gekennzeichnet, daß
das organische hochmolekulare Material (c) des Substrats (3) aus der Gruppe mit Polymethylmethacrylat, Polycarbonat-Polyester, Nylon, Polyethylen, Polysulfon und Polystyrol gewählt ist.

6.  Verfahren zum Herstellen eines Dünnfilm-Wellenleiter-Aufbaus nach einem der Ansprüche 1 bis 5, mit den Arbeitsschritten:
    -   Vorsehen eines Substrats (3) aus einem ersten organischen hochmolekularen Material (c) von ausreichender Dicke und Steifigkeit, um selbsttragend zu sein,
    -   Herstellen einer Zwischenschicht (2) auf einer Fläche des Substrats (3) durch Auftragen und Trocknen einer Lösung eines zweiten hochmolekularen Materials (b), wobei das zweite Material einen Lösungsmittel-Löslichkeits-Parameter hat, der von dem des ersten Materials (c) des Substrats (3) verschieden ist,
    -   Lösen eines durchsichtigen dritten organischen hochmolekularen Materials (a), dessen Lösungsmittel-Löslichkeit von der des zweiten Materials (b) um nicht weniger als $2,0 \times 10^{-3}$ $(J/m^3)^{\frac{1}{2}}$ abweicht und dessen Brechungsindex größer ist als der des zweiten Materials (b), in einem Lösungsmittel, das das zweite Material (b) nicht wesentlich auflöst,
    -   Herstellen einer Wellenleiter-Schicht auf der Oberfläche der Zwischenschicht (2) durch Auftragen der Lösung des dritten Materials (a) auf diese Fläche und Trocknen der Lösung.

7.  Verfahren nach Anspruch 6,
    dadurch gekennzeichnet, daß
    die Lösungen der Zwischenschicht (2) und/oder der Wellenleiter-Schicht (1) durch Spin-Beschichtung aufgetragen werden.

# FIG. 1

# FIG. 2

# FIG. 3